# EUROPÄISCHE PATENTANMELDUNG

(11) **EP 4 043 160 A1**
(43) Veröffentlichungstag der Anmeldung: **17.08.2022**
(21) Anmeldenummer: 21156407.5
(22) Anmeldetag: 10.02.2021
(51) Int. Cl.: B25J 9/16

(54) **BIN-PICKING-STATION MIT INTERNEM SPEICHER**

(71) Anmelder: Inores GmbH, 6312 Steinhausen (CH)
(72) Erfinder: Wede, Felix, 85435 Erding (DE)
(74) Vertreter: Schwarz & Partner Patentanwälte GmbH

(57) **Zusammenfassung**

Die Erfindung betrifft eine Vorrichtung (11) zur Aufnahme eines Bauteils (2) aus einem Behälter (3) und Übergabe des Bauteils (2) an eine Produktionsseite (7), wobei die Vorrichtung (11) einen Greifroboter (15) umfasst, welcher dazu ausgebildet ist, einen Bauteil (2) aus dem Behälter (3) aufzunehmen und den aus dem Behälter (3) aufgenommenen Bauteil (2) auf eine Transfervorrichtung (12) zu legen, wobei die Vorrichtung (11) eine Steuereinrichtung und einen internen Speicher (16) mit zumindest einer Bauteilaufnahme (18) zur Zwischenlagerung von Bauteilen (2) aufweist, wobei der Greifroboter (15) dazu ausgebildet ist, nach Erhalt eines Lager-Signals von der Steuereinrichtung den aus dem Behälter (2) aufgenommenen Bauteil (2) auf die Bauteilaufnahme (18) des internen Speichers (16) zu legen, und wobei der Greifroboter (15) weiters dazu ausgebildet ist, nach Erhalt eines Beschleunigungs-Signals von der Steuereinrichtung den vom internen Speicher (16) aufgenommenen Bauteil (2) auf die Transfervorrichtung (12) zu legen.

## Beschreibung

Die Erfindung betrifft eine Vorrichtung zur automatisierten Aufnahme eines Bauteils aus einem Behälter und Übergabe des Bauteils an eine Produktionsseite, wobei die Vorrichtung einen Greifroboter umfasst, welcher dazu ausgebildet ist, einen Bauteil aus dem Behälter aufzunehmen und den aus dem Behälter aufgenommenen Bauteil auf eine Transfervorrichtung zu legen.

Aus dem Stand der Technik, insbesondere aus der Automobilproduktion, ist der Einsatz von Produktionsrobotern bekannt, welche geordnete Bauteile aufgreifen und an einem Produktionstisch verarbeiten können. Die Produktionsroboter befinden sich auf einer sogenannten Produktionsseite, welche aus Sicherheitsgründen nicht von Personal betreten werden darf. Das zugrundeliegende Problem besteht somit darin, dem Produktionsroboter die Bauteile in einer geordneten Weise zuzuführen, ohne dass Personal die Produktionsseite betreten müsste.

Üblicherweise wird dies dadurch gelöst, dass eine Zuführseite räumlich vom Produktionsbereich getrennt ist, beispielsweise durch einen Schutzzaun, und ein sogenannter Stauförderer von der Zuführseite durch den Schutzzaun zur Produktionsseite geführt ist. Bei diesem Aufbau der Produktionsanlage kann ein Behälter mit Bauteilen, eine sogenannte Bauteilkiste, an der Zuführseite bereitgestellt werden, in der die Bauteile ungeordnet vorliegen. Ein Produktionsmitarbeiter kann daraufhin mehrere Bauteile aus der Bauteilkiste entnehmen und diese in einer geordneten Lage auf speziellen Paletten des Stauförderers auflegen. Der Stauförderer oder eine ähnliche Vorrichtung kann daraufhin die geordneten Bauteile durch den Schutzzaun zur Produktionsseite verbringen, wo sie vom Produktionsroboter aufgegriffen und verarbeitet werden können.

Um diesen Prozess zu automatisieren, sehen bekannte Weiterentwicklungen vor, dass der Produktionsmitarbeiter durch eine automatisierte Station bzw. Zelle, eine sogenannte Bin-Picking-Station bzw. Bin-Picking-Zelle, ersetzt wird. Bei Bin-Picking-Stationen handelt es sich um abgeschlossene Einheiten, die alle Sicherheitsvorschriften und Maschinenrichtlinien erfüllen. Diese Bin-Picking-Stationen automatisieren somit exakt die Tätigkeit der Entnahme von Bauteilen aus der Bauteilkiste und des Einlegens von Bauteilen in die speziellen Paletten des Stauförderers.

Um keine Verzögerung in der Produktion herbeizuführen, muss die durchschnittliche Taktzeit der Bin-Picking-Station geringer sein als die durchschnittliche Taktzeit des Produktionsroboters. Als durchschnittliche Taktzeit der Bin-Picking-Station wird die durchschnittliche Zeit pro Bauteil bezeichnet, welche die Bin-Picking-Station benötigt, um einen Bauteil aus dem Behälter aufzugreifen, gegebenenfalls einer Qualitätskontrolle zu unterziehen und auf den Stauförderer, oder im Allgemeinen auf eine Transfereinheit, zu legen. Als durchschnittliche Taktzeit des Produktionsroboters wird die durchschnittliche Zeit pro Stück bezeichnet, welche der Produktionsroboter benötigt, um einen Bauteil vom Stauförderer, oder im Allgemeinen von einer Transfereinheit, aufzugreifen und auf dem Produktionstisch zu verbauen. Vereinfacht gesprochen muss die Bin-Picking-Station schneller arbeiten als der Produktionsroboter, um diesen nicht zu verlangsamen.

Auch mit den aus dem Stand der Technik bekannten Bin-Picking-Stationen wird im Allgemeinen eine durchschnittliche Taktzeit erzielt, die geringer ist als eine Taktzeit des Produktionsroboters, so dass dieses Problem im Wesentlichen gelöst schien. In der Praxis hat sich jedoch gezeigt, dass es trotzdem vereinzelt dazu kommt, dass der Produktionsroboter auf Bauteile warten muss. Dieses Phänomen tritt dadurch auf, dass die Bin-Picking-Station eine hohe Varianz bei den Aufgriffszeiten bzw. Kontrollzeiten der Bauteile aufweist. Da die Bauteile im Behälter ungeordnet vorliegen, kommt es dazu, dass manche Teile schnell aufgreifbar sind und es bei anderen länger dauert, da diese beispielsweise ungünstig aufgegriffen wurden. Zwar werden sich die schnellen und die langsamen Aufgriffszeiten im Mittel ausgleichen, um die vorerwähnte geringe Taktzeit zu erzielen, jedoch können sich Problemfälle ergeben, wenn mehrere schlecht aufgreifbare Bauteile hintereinander bearbeitet werden, wodurch es zu einem temporären Mangel an Bauteilen für den Produktionsroboter kommt.

Es ist daher die Aufgabe der Erfindung, diese Probleme des Standes der Technik zu überwinden und eine Bin-Picking-Station, d.h. eine Vorrichtung zur Aufnahme eines Bauteils aus einem Behälter und Übergabe des Bauteils an eine Produktionsseite, zu schaffen, welche nicht nur eine kurze durchschnittliche Taktzeit aufweist, sondern auch einen temporären Mangel verhindern kann.

Diese Aufgabe wird durch eine Vorrichtung zur Aufnahme eines Bauteils aus einem Behälter und Übergabe des Bauteils an eine Produktionsseite gelöst,
wobei die Vorrichtung einen Greifroboter umfasst, welcher dazu ausgebildet ist, einen Bauteil aus dem Behälter aufzunehmen und den aus dem Behälter aufgenommenen Bauteil auf eine Transfervorrichtung zu legen, wobei die Vorrichtung eine Steuereinrichtung und einen internen Speicher mit zumindest einer Bauteilaufnahme zur Zwischenlagerung von Bauteilen aufweist, wobei der Greifroboter dazu ausgebildet ist, nach Erhalt eines Lager-Signals von der Steuereinrichtung, d.h. nach dem Wechseln in einen Lagermodus, einen Bauteil aus dem Behälter aufzunehmen und den aus dem Behälter aufgenommenen Bauteil auf die Bauteilaufnahme des internen Speichers zu legen, und wobei der Greifroboter weiters dazu ausgebildet ist, nach Erhalt eines Beschleunigungs-Signals von der Steuereinrichtung, d.h. nach dem Wechseln in einen Beschleunigungsmodus, einen Bauteil von der Bauteilaufnahme des internen Speichers aufzunehmen und den vom internen Speicher aufgenommenen Bauteil auf die Transfervorrichtung zu legen.

Durch den internen Speicher können erfindungsgemäß ein Lagermodus und ein Beschleunigungsmodus geschaffen werden. Im Lagermodus kann "vorgearbeitet" werden, wenn die Vorrichtung anderenfalls pausieren würde. Im Lagermodus werden Bauteile wie im Normalbetrieb aus dem Behälter aufgenommen und gegebenenfalls einer Qualitätskontrolle unterzogen. Anstatt die Bauteile jedoch auf die Transfervorrichtung zu legen, werden diese im internen Speicher abgelegt. Besteht nun ein kurzfristiger Bedarf an Bauteilen auf der Transfervorrichtung bzw. am Produktionsroboter, kann die Vorrichtung in den Beschleunigungsmodus wechseln. Im Beschleunigungsmodus nimmt der Greifroboter Bauteile aus dem internen Speicher auf und legt diese auf die Transfervorrichtung. Da die Bauteile im internen Speicher auf Bauteilauflagen vorliegen, befinden sich diese in einer vordefinierten Position, wodurch Bauteile im Beschleunigungsmodus schneller auf die Transfervorrichtung gelegt werden können als im Normalbetrieb, wo die Bauteile aus einer unbekannten Position aufgenommen werden müssen.

Weiters kann eine Qualitätskontrolle der Bauteile, beispielsweise durch eine Kamera oder speziell ausgebildete Sensoren in der Vorrichtung, bereits im Lagermodus durchgeführt werden, sodass alle im internen Speicher befindlichen Bauteile bereits einer Qualitätskontrolle unterzogen wurden und diese daher im Beschleunigungsmodus entfallen kann, was zu einer zusätzlichen Erhöhung der Geschwindigkeit im Beschleunigungsmodus führt.

Die erfindungsgemäße Vorrichtung schafft somit den Vorteil, dass durch den Beschleunigungsmodus eine temporäre Taktzeitverkürzung erzielt wird. Somit können selbst kurzfristige Taktzeiterhöhungen im Normalbetriebsmodus ausgeglichen werden, indem das Beschleunigungs-Signal an den Greifroboter gesendet wird, wodurch der Betrieb des Produktionsroboters stabiler als im Stand der Technik durchgeführt werden kann.

Bevorzugt ist die Steuereinrichtung dazu ausgebildet, das Lager-Signal an den Greifroboter zu senden, wenn die Transfervorrichtung voll beladen ist. Eine voll beladene Transfervorrichtung zeigt üblicherweise den Beginn einer Pause an, sodass die Vorrichtung diesen Zeitraum ausnutzen kann, um den internen Speicher mit Bauteilen zu befüllen. Alternativ oder zusätzlich könnte vorgesehen werden, dass die Steuereinrichtung ein Signal über eine Betriebsbereitschaft des Produktionsroboters erhält. So kann der interne Speicher beispielsweise beladen werden, bevor der Produktionsroboter seine Arbeit aufnimmt.

In einer weiteren bevorzugten Ausführungsform ist die Steuereinrichtung dazu ausgebildet, das Beschleunigungs-Signal an den Greifroboter zu senden, wenn ein Bauteil auf die Transfervorrichtung legbar ist und sich zumindest ein Bauteil im internen Speicher befindet. Die Vorrichtung kann somit jedes Bauteil im internen Speicher bei der nächsten Gelegenheit auf die Transfervorrichtung legen, um diese so schnell wie möglich zu beladen, wodurch temporäre Taktzeiterhöhungen bereits vorab kompensiert werden können.

Alternativ oder zusätzlich zur vorgenannten Ausführungsform kann vorgesehen werden, dass die Steuereinrichtung dazu ausgebildet ist, das Beschleunigungs-Signal an den Greifroboter zu senden, wenn eine temporäre Reduktion der Taktzeit der Vorrichtung benötigt wird. Damit kann die Vorrichtung so lange wie möglich im Normalbetrieb betrieben werden, bis ein Bedarfsfall eintritt. Der interne Speicher kann somit als Rückfallsmöglichkeit eingesetzt werden, wobei nur im Notfall auf diesen zugegriffen wird. Dies kann die insgesamte Arbeitszeit und damit den Energiebedarf gegenüber der vorgenannten Ausführungsform reduzieren.

Um die Vorrichtung länger im Beschleunigungsmodus zu halten, kann der interne Speicher zumindest fünf, bevorzugt zumindest zehn, bevorzugt zumindest dreißig Bauteilaufnahmen aufweisen. Besonders bevorzugt kann der interne Speicher zumindest so viele Bauteilaufnahmen aufweisen, wie Bauteile gleichzeitig auf die Transfervorrichtung gelegt werden können. Dadurch kann beispielsweise eine ganze Palette auf der Transfervorrichtung vollständig im Beschleunigungsmodus beladen werden, wonach die Vorrichtung wieder in den Lagermodus wechseln kann, bis die nächste Palette auf der Transfervorrichtung bereitsteht.

Weiters bevorzugt weist der interne Speicher zumindest zwei unterschiedlich ausgestaltete Bauteilaufnahmen für unterschiedliche Typen von Bauteilen auf. Dies kann beispielsweise dazu ausgenutzt werden, um in der Vorrichtung zwei Bauteile parallel zu verarbeiten, d.h. zwei Behälter mit unterschiedlichen Bauteilen in die Vorrichtung einzubringen und beide Typen von Bauteilen auf die Transfervorrichtung zu legen, wobei der Lagermodus und der Beschleunigungsmodus für beide Bauteile eingesetzt werden können. Der interne Speicher mit zwei unterschiedlichen Bauteilaufnahmen kann jedoch auch hilfreich sein, wenn die Vorrichtung nur einen Typ von Bauteilen verarbeitet. Der interne Speicher kann beispielsweise über einen ersten Zeitraum für die Bauteile eines ersten Typs und über einen zweiten Zeitraum für Bauteile eines zweiten Typs verwendet werden, ohne die Vorrichtung 1 zu modifizieren.

Um den internen Speicher konstruktiv besonders einfach und auch modular auszugestalten, kann der interne Speicher zumindest einen oder zumindest zwei bevorzugt parallel zueinander angeordnete Bauteilträger umfassen, auf denen Bauteilaufnahmen linear angeordnet sind.

Die im Zusammenhang mit der Vorrichtung eingesetzte Transfervorrichtung kann ein Stauförderer mit Förderband oder ein Produktionspuffer sein, der zumindest zwei verschwenkbare Bauteilträger umfasst, die jeweils zumindest zwei weitere Bauteilaufnahmen zur Aufnahme eines Bauteils umfassen, wobei die Bauteilträger jeweils um parallel zueinander liegende Achsen schwenkbar sind und von einer Beladestellung, in welcher Bauteile vom Greifroboter auf die Bauteilaufnahmen legbar sind, in eine Entladestellung verschwenkbar sind, in welcher die Bauteile von der Produktionsseite entnehmbar sind. Der Produktionspuffer ist deshalb vorteilhaft, da er günstiger als ein Stauförderer ist und überdies einen Raumgewinn erzielt.

Das Erkennen, wann der interne Speicher vollständig, teilweise oder nicht beladen ist, kann durch eine Auswerteeinheit erfolgen, welche wie aus dem Stand der Technik bekannt Sensorsignale von einer Vielzahl von Sensoren erhalten könnte, die jeweils eine der Bauteilaufnahmen überwachen. Dieses Verfahren ist jedoch aufgrund der hohen Anzahl an benötigten Sensoren, der Vielzahl an erforderlichen Steuereingängen an der Auswerteeinheit und der komplizierten Auswertung nur mit einem großen Kostenaufwand umsetzbar.

In einer besonders bevorzugten Ausführungsform der Erfindung umfasst die erfindungsgemäße Lösung daher eine Auswerteeinheit, eine mit der Auswerteeinheit verbundene Kamera und einen Leuchtpunkt unter jeder der Bauteilaufnahmen aller Bauteilträger, wobei ein jeweiliger Leuchtpunkt von der Kamera erkennbar ist, wenn die jeweilige Bauteilaufnahme unbelegt ist und von der Kamera unerkennbar ist, wenn sich ein Bauteil auf der jeweiligen Bauteilaufnahme befindet, wobei die Auswerteeinheit dazu ausgebildet ist, eine Bauteilaufnahme als belegt oder verdeckt zu erkennen, wenn ein jeweiliger Leuchtpunkt im von der Kamera aufgenommenen Bild ersichtlich ist oder nicht. Diese Lösung hat den Vorteil, dass die Auswerteeinheit nur einen Steuereingang aufweisen muss, um das Bild der Kamera zu erhalten. Die Auswertung des von der Kamera aufgenommenen Bildes, ob Lichtpunkte im Bild ersichtlich sind oder nicht, kann vergleichsweise einfach umgesetzt werden.

In der letztgenannten Ausführungsform können alle Leuchtpunkte eines Bauteilträgers auch durch eine einzige Lichtquelle, bevorzugt eine LED-Leiste, beleuchtet und jeweils durch Öffnungen im Bereich der Bauteilaufnahmen ausgebildet werden, wobei jeder Bauteilträger weiters bevorzugt eine weitere Öffnung umfasst, durch welche die Lichtquelle ersichtlich ist, selbst wenn alle Bauteilaufnahmen von Bauteilen belegt sind. Dies ermöglicht eine einfache Funktionsüberprüfung der Lichtquelle, auch ohne einen Bauteil vom Bauteilträger entnehmen zu müssen.

Weiters bevorzugt umfasst die Vorrichtung ein Gehäuse oder Abgrenzung, wobei der Greifroboter vom Gehäuse umschlossen ist und der Behälter über eine Einschuböffnung in die Vorrichtung einbringbar ist. Dadurch kann eine besonders sichere und abgeschlossene Vorrichtung geschaffen werden, da der Greifroboter von außen nicht zugänglich ist und daher keine Gefahrenquelle darstellt.

Insgesamt kann somit ein System umfassend die vorgenannte Vorrichtung und einen auf der Produktionsseite befindlichen Produktionsroboter geschaffen werden, wobei der Produktionsroboter dazu ausgebildet ist, Bauteile von der Transfervorrichtung aufzunehmen, wobei der Produktionsroboter bevorzugt eine durchschnittliche Normaltaktzeit aufweist, die höher ist als eine durchschnittliche Produktionstaktzeit der Vorrichtung.
Figur 1 zeigt ein System mit einem manuellen Arbeitsplatz, einem Stauförderer und einem Produktionsroboter gemäß dem Stand der Technik.
Figur 2 zeigt eine erfindungsgemäße Vorrichtung in einer ersten Perspektivansicht.
Figur 3 zeigt die Vorrichtung von Figur 2 in einer zweiten Perspektivansicht.
Figur 4 zeigt eine erste Ausführungsform eines internen Speichers.
Figur 5 zeigt eine zweite Ausführungsform eines internen Speichers.
Figur 6 zeigt eine schematische Innenansicht der erfindungsgemäßen Vorrichtung.
Figur 7 zeigt eine besondere Ausführungsform eines Bauteilträgers des internen Speichers von Figur 4 im Detail.

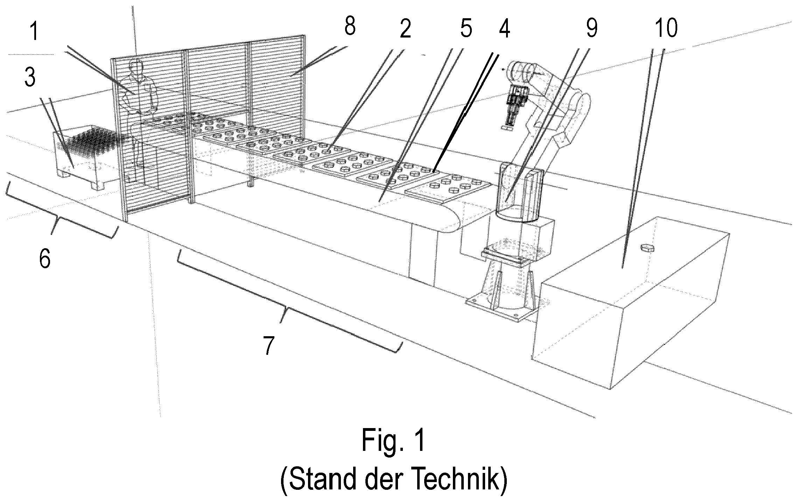

Figur 1 zeigt ein aus dem Stand der Technik bekanntes System, bei dem ein Produktionsmitarbeiter 1 Bauteile 2 aus einem Behälter 3 entnimmt und in einer geordneten Lage auf eine spezielle Palette 4 eines Stauförderers 5 auflegt. Die Bauteile 2 liegen im Behälter 3 ungeordnet vor und müssen daher vom Produktionsmitarbeiter 1 manuell in eine richtige Lage gebracht werden, bevor diese auf die Palette 4 des Stauförderers 5 aufgelegt werden.

Der Stauförderer 5 bringt die nun geordneten Bauteile 2 auf der Palette 4 von der Zuführseite 6, an welcher der Produktionsmitarbeiter 1 arbeitet, zur sicherheitskritischen Produktionsseite 7, die von Personal nicht betreten werden darf. Die Zuführseite 6 ist von der Produktionsseite 7 durch einen Schutzzaun 8 getrennt. Auf der Produktionsseite 7 befindet sich ein Produktionsroboter 9, welcher die auf der Palette 4 geordnet vorliegenden Bauteile 2 aufgreift und auf einem Produktionstisch 10 verarbeitet. Dieses System ist insbesondere in der Automobilindustrie verbreitet.

Es ist bekannt, den Produktionsmitarbeiter 1 durch eine sogenannte Bin-Picking-Station bzw. Zelle zu ersetzen, welche mittels eines Greifroboters in den Behälter 3 greift, um einen Bauteil 2 aufzugreifen, gegebenenfalls einer Qualitätskontrolle zu unterziehen, in die richtige Lage zu bringen und auf die Palette 4 des Stauförderers 5 aufzulegen. Die Mechanik und Steuerung der im folgenden beschriebenen Vorrichtung, insbesondere die allgemeinen Techniken zur Aufnahme von ungeordneten Bauteilen 2 aus dem Behälter 3 und dem Verbringen der Bauteile 2 in eine vorbestimmte Position, sind aus dem Stand der Technik an sich bekannt.

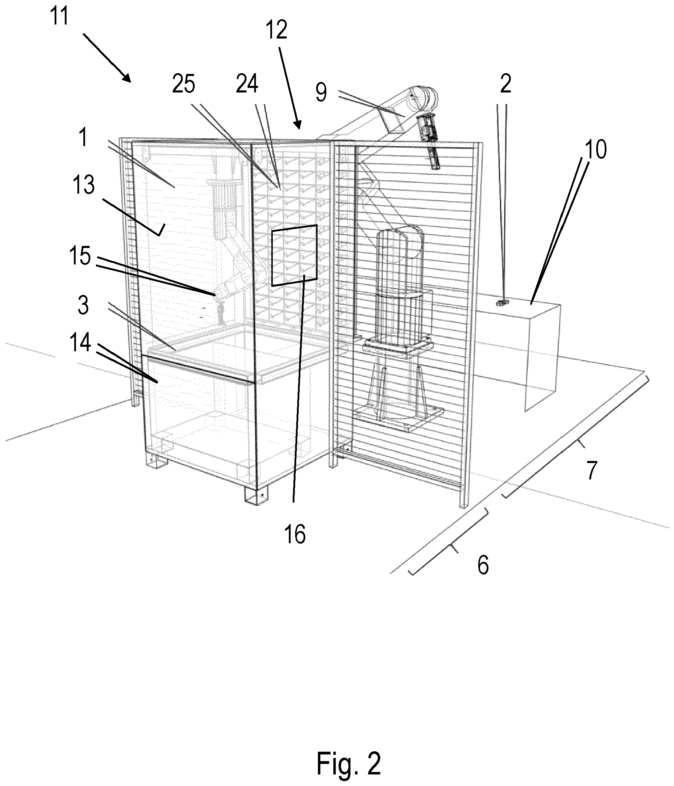

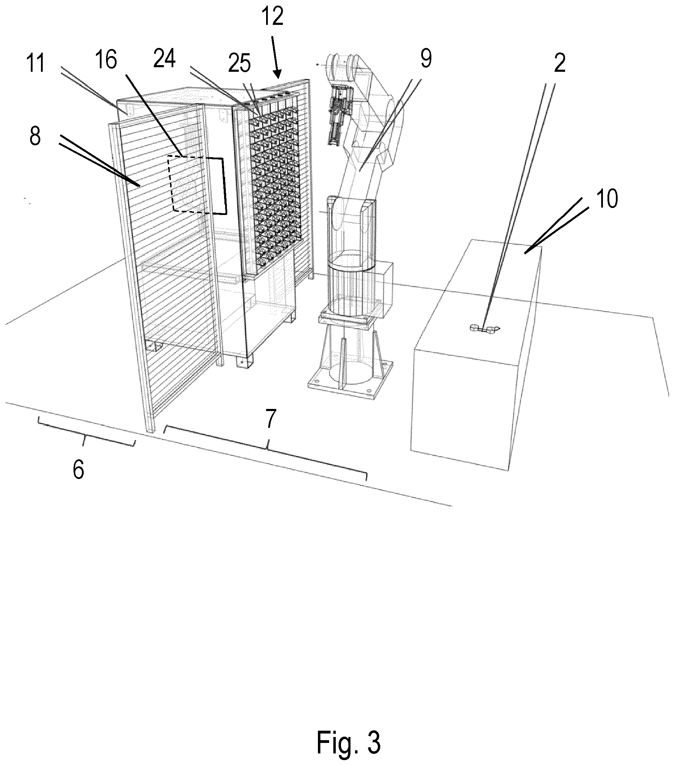

Erfindungsgemäß wird gemäß den Figuren 2 und 3 eine Vorrichtung 11 vorgesehen, d.h. eine Bin-Picking-Station, welche einen internen Speicher 16 aufweist, um kurzzeitige Spitzen in der Taktzeit auszugleichen. Im Folgenden wird die Vorrichtung 11 im Detail beschrieben, wobei insbesondere die Bauteile 2, der Behälter 3, die Zuführseite 6, die Produktionsseite 7, der Schutzzaun 8, der Produktionsroboter 9, und der Produktionstisch 10 gegenüber der Ausführungsform von Figur 1 unverändert deshalb mit gleichen Bezugszeichen versehen sind.

Die Vorrichtung 11 umfasst ein Gehäuse 13 mit einer Öffnung 14, wobei der Behälter 3 mit den Bauteilen 2 von der begehbaren Zuführseite 6 her manuell oder automatisch durch die Öffnung 14 einschiebbar ist. Innerhalb des Gehäuses 13 ist ein Greifroboter 15 mit Greifarm vorgesehen, welcher dazu ausgebildet ist, Bauteile 2 aus dem in die Vorrichtung 11 geschobenen Behälter 3 zu entnehmen und in einer geordneten Lage auf eine als Produktionspuffer ausgebildete Transfervorrichtung 12 zu verbringen, die unten im Detail beschrieben ist. Alternativ könnte die Transfervorrichtung 12 auch als allgemein bekannter Stauförderer 5 ausgebildet sein.

Der interne Speicher 16 kann beispielsweise eine Größe von 900 x 1000 mm aufweisen und sich an einer Seitenwand der Vorrichtung 11 befinden, die beispielsweise eine Grundfläche von 1 m² aufweisen könnte. Ein interner Speicher 16 dieser Größe erlaubt je nach Bauteilgröße eine Speicherung von 50 bis 100 Bauteilen 2. Der Gesamtbedarf des Systems umfassend die Vorrichtung 11 und den Produktionsroboter 9 beträgt ca. 2 m².

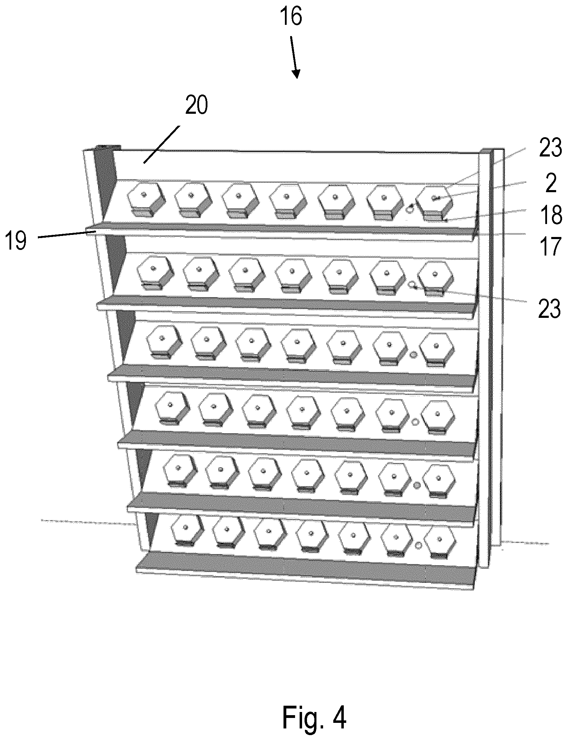

Figur 4 zeigt den internen Speicher 16 im Detail, welcher in der dargestellten Ausführungsform sechs Bauteilträger 17 mit sieben gleichartig ausgebildeten Bauteilaufnahmen 18 zur Zwischenlagerung von Bauteilen 2 aufweist. Die Bauteilträger 17 sind starr in der Vorrichtung 11 montiert, beispielsweise an einer Seitenwand der Vorrichtung 11, können jedoch modular, d.h. auswechselbar, ausgebildet werden. Die Bauteilaufnahmen 18 können beispielsweise einen oder mehrere Zentrierstifte und/oder Einweiser für das Bauteil 2 umfassen, um die korrekte Positionierung der Bauteile 2 auf dem Bauteilträger 17 zu gewährleisten. Die Form der Bauteilaufnahme 18 und der gegenseitige Abstand zweier Bauteilaufnahmen 18 auf einem Bauteilträger 17 ist in der Regel von der Form und den Abmessungen des aufzulegenden Bauteils 2 abhängig. Üblicherweise befinden sich zwei bis dreißig, bevorzugt vier bis fünfzehn, Bauteilaufnahmen 18 auf einem Bauteilträger 17. Auch die Anzahl der Bauteilträger 17 kann im Wesentlichen beliebig gewählt werden, bevorzugt zwischen zwei und fünfzehn, besonders bevorzugt zwischen vier und zehn. Besonders bevorzugt kann der interne Speicher 16 insgesamt zumindest fünf, bevorzugt zumindest zehn, bevorzugt zumindest dreißig Bauteilaufnahmen 18 aufweisen. Auch könnte der interne Speicher 16 zumindest so viele Bauteilaufnahmen 18 aufweisen, wie Bauteile 2 gleichzeitig auf die Transfervorrichtung 12 gelegt werden können.

Die Bauteilträger 17 können je nach Anwendungsfall horizontal, vertikal oder schräg in einen Rahmen oder an eine Wandfläche im Inneren der Vorrichtung 11 montiert werden. Wie in den Figuren 4, 5 und 7 gezeigt können die Bauteilträger 17 beispielsweise L-förmige Profile sein, die beispielsweise eine erste Trägerwand 19 und eine zweite Trägerwand 20 aufweisen, wobei die Bauteilaufnahmen 18 in einem Zwickel zwischen den Trägerwänden 19, 20 angeordnet sind.

Es versteht sich, dass der interne Speicher 16 auch anders aufgebaut sein könnte, z.B. indem die Bauteilaufnahmen 18 in einem Array unmittelbar auf eine Platte, z.B. eine Seitenwand der Vorrichtung 11, montiert werden. Die Bauteilträger 17 ermöglichen jedoch insbesondere eine modulare Ausgestaltung der Bauteilaufnahmen 18, sodass beispielsweise ein Bauteilträger 17 mit Bauteilaufnahmen 18 mit einem anderen Bauteilträger 17 mit anderen Bauteilaufnahmen 18 ausgewechselt werden kann.

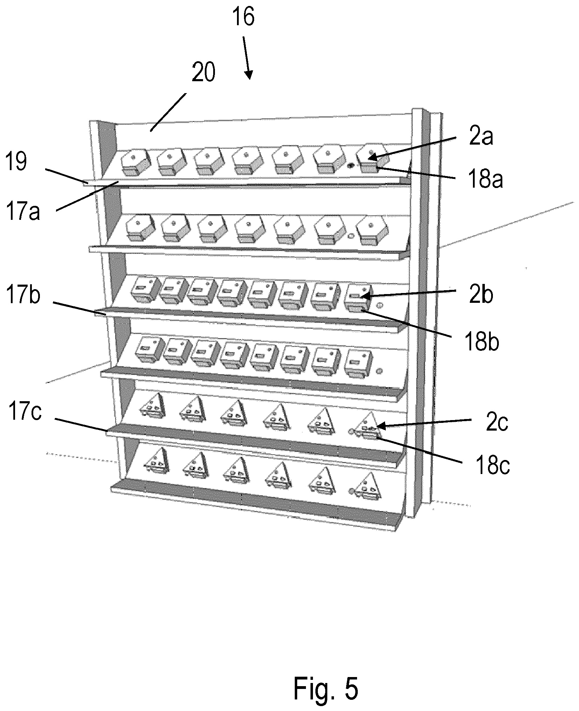

Somit kann der interne Speicher 16 in einer ersten Ausführungsform (Figur 4) dazu ausgebildet sein, nur eine Art von Bauteil 2 zwischenzulagern. D.h. alle Bauteile 2 weisen die gleichen Maße auf und sind im Wesentlichen gleich gefertigt, wodurch auch alle Bauteilaufnahmen 18 gleich gefertigt sind. In einer Ausführungsform (Figur 5) könnten jedoch auch mehrere Behälter 3 in die Vorrichtung 11 eingeführt werden, in denen jeweils unterschiedliche Bauteile 2 mit unterschiedlichen Maßen zugeführt werden, z.B. befinden sich im ersten Behälter 3 Bauteile 2 mit ersten Maßen und im zweiten Behälter 2 befinden sich Bauteile 2 mit zweiten Maßen. Es ist ersichtlich, dass es erforderlich sein kann, Bauteilaufnahmen 18 an die unterschiedlichen Bauteile 2 anzupassen, sofern die Bauteilaufnahmen 18 nicht als Universalbauteilaufnahmen für Bauteile 2 unterschiedlicher Maße ausgebildet sind. Beispielsweise kann der interne Speicher 16 zumindest einen ersten Bauteilträger 17a umfassen, der erste Bauteilaufnahmen 18a aufweist, auf welche Bauteile 2a mit ersten Maßen auflegbar sind, und zumindest einen zweiten Bauteilträger 17b umfassen, der zweite Bauteilaufnahmen 18b aufweist, auf welche Bauteile 2b mit zweiten Maßen auflegbar sind. In Figur 5 ist zudem ein dritter Bauteilträger 17c dargestellt, der dritte Bauteilaufnahmen 18c umfasst, auf welche Bauteile 2c mit dritten Maßen auflegbar sind. Alternativ oder zusätzlich könnte ein Bauteilträger 17 eingesetzt werden, der sowohl zumindest eine erste Bauteilaufnahme 18a umfasst, auf welche Bauteile 2 mit ersten Maßen auflegbar sind, als auch zumindest eine zweite Bauteilaufnahme 18b umfasst, auf welche Bauteile 2 mit zweiten Maßen auflegbar sind.

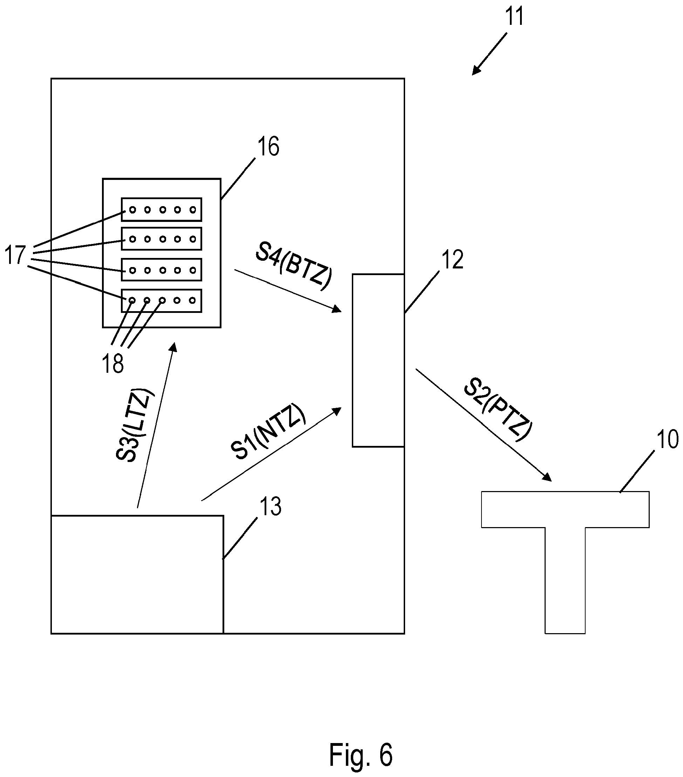

Anhand von Figur 6 wird nun der Einsatz des internen Speichers 16 in der Vorrichtung 11 näher erläutert. Im üblichen Betrieb, der auch im Stand der Technik durchgeführt wird, nimmt der in dieser Figur nicht weiter dargestellte Greifroboter 15 einen Bauteil 2 aus dem Behälter 3 auf und verbringt den Bauteil 2 auf dem Weg S1 auf die Transfervorrichtung 12. Sobald dem in dieser Figur nicht weiter dargestellten Produktionsroboter 9 Bauteile 2 auf der Transfervorrichtung 12 zur Verfügung stehen, verbringt dieser die Bauteile 12 auf dem Weg S2 von der Transfervorrichtung 12 zum Produktionstisch 10 und verbaut diese dort.

Die Vorrichtung 11 weist eine durchschnittliche Normaltaktzeit NTZ auf, worunter die durchschnittliche Zeit pro Bauteil 2 bezeichnet wird, welche die Vorrichtung 11 benötigt, um einen Bauteil 2 aus dem Behälter 3 aufzugreifen, gegebenenfalls einer Qualitätskontrolle zu unterziehen und auf die Transfervorrichtung 12 zu legen. Die durchschnittliche Normaltaktzeit NTZ der Vorrichtung 11 unterliegt einer großen Varianz, was dadurch begründet ist, dass die Bauteile 2 in dem Behälter 3 ungeordnet vorliegen und es immer wieder zu Schwierigkeiten bei der Aufnahme der Bauteile 2 kommt. Zudem muss auch eine Qualitätskontrolle gegebenenfalls öfters wiederholt werden oder, wenn die Qualitätskontrolle einen mangelhaften Bauteil erkennt, überhaupt ein neuer Bauteil 2 aufgenommen werden.

Der Produktionsroboter 9 weist eine durchschnittliche Produktionstaktzeit PTZ auf, worunter die durchschnittliche Zeit pro Stück verstanden wird, welche der Produktionsroboter 9 benötigt, um einen Bauteil 2 von der Transfervorrichtung 12 aufzugreifen und auf dem Produktionstisch 9 zu verbauen. Die Produktionstaktzeit PTZ ist äußerst konstant, d.h. die Varianz der einzelnen Verarbeitungszeiten der Bauteile 2 durch den Produktionsroboter 9 ist gering. Dies hat unter anderem den Hintergrund, dass der Produktionsroboter 9 Bauteile 2 von der Transfervorrichtung 12 in einer vorbestimmten Lage aufnehmen kann und alle Verarbeitungsschritte am Produktionstisch 10 gleich ausgeführt werden.

Damit der Produktionsroboter 9 stetig arbeiten kann, soll die durchschnittliche Normaltaktzeit NTZ der Vorrichtung 11 unter der durchschnittlichen Produktionstaktzeit PTZ des Produktionsroboters 9 liegen, wodurch dem Produktionsroboter 9 im Bestfall immer einen Bauteil 2 auf der Transfervorrichtung 12 zur Verfügung steht. Aufgrund der großen Varianz der durchschnittlichen Normaltaktzeit NTZ der Vorrichtung 11 kann es jedoch dazu kommen, dass ein temporärer Mangel entsteht, z.B. wenn mehrere schwierig aufzugreifende Bauteile 2 hintereinander folgen. Aus diesem Grund wird der interne Speicher 16 vorgesehen.

Da die durchschnittliche Normaltaktzeit NTZ der Vorrichtung 11 unter der durchschnittlichen Produktionstaktzeit PTZ des Produktionsroboters 9 liegt, steht der Vorrichtung 11 im Durchschnitt ein Zeitraum PTZ-NTZ zur Verfügung, an dem die Vorrichtung 11 stillstehen würde. Dieser Zeitraum PTZ-NTZ, in dem die Vorrichtung 11 üblicherweise pausieren würde, wird ausgenutzt, um in einem "Lagermodus" auf einem Weg S3 einen Bauteil 2 vom Behälter 3 aufzunehmen und auf eine Bauteilaufnahme 18 des internen Speichers 16 zu legen. Die durchschnittliche Lagertaktzeit LTZ, welche die durchschnittliche Zeit pro Bauteil 2 bezeichnet, welche die Vorrichtung 11 benötigt, um einen Bauteil 2 aus dem Behälter 3 aufzugreifen und im internen Speicher 16 abzulegen, ist im Wesentlichen dieselbe wie die Normaltaktzeit NTZ der Vorrichtung 11, denn auch hierbei wird ein Bauteil 2 aus einer undefinierten Lage aufgenommen und gegebenenfalls einer Qualitätskontrolle unterzogen.

Um die Beladegeschwindigkeit der Vorrichtung 11 auf die Transfervorrichtung 12 zu erhöhen, werden die Bauteile 2 nun nicht wie üblich aus dem Behälter 3 gegriffen, sondern in einem "Beschleunigungsmodus" in einem Weg S4 von den Bauteilauflagen 18 des internen Speichers 16 aufgenommen und auf die Transfervorrichtung 12 gelegt. Die durchschnittliche Beschleunigungstaktzeit BTZ, worunter die durchschnittliche Zeit pro Bauteil 2 bezeichnet wird, welche die Vorrichtung 11 benötigt, um einen Bauteil 2 vom internen Speicher 16 aufzugreifen und auf die Transfervorrichtung 12 zu legen, ist äußerst kurz und weist eine geringe Varianz auf, da der Greifroboter 15 die Bauteile aus einer vordefinierten Lage aufnehmen kann und kaum äußere Einflüsse zu tragen kommen. Insbesondere kann die Qualitätskontrolle bereits im Lagermodus durchgeführt werden, bevor der Bauteil 2 im internen Speicher 16 abgelegt wird, sodass auch diese Zeit im Beschleunigungsmodus eingespart wird. Es kann somit zusammengefasst werden: Produktionstaktzeit PTZ > Normaltaktzeit NTZ = Lagertaktzeit LTZ > Beschleunigungstaktzeit BTZ.

Wann nun der Lagermodus oder der Beschleunigungsmodus durchgeführt wird, kann je nach Anwendungsfall gewählt werden. Der Lagermodus wird üblicherweise durchgeführt, wenn die Transfervorrichtung 12 voll beladen ist, d.h. wenn die Vorrichtung 11 zu einem Zeitpunkt keine weiteren Bauteile 2 auf die Transfervorrichtung 12 legen kann. Dies wird üblicherweise durch eine Steuereinrichtung festgestellt, die beispielsweise ein von einer Kamera aufgenommenes Bild von der Transfervorrichtung 12 aufnimmt und auswertet oder ein entsprechendes Sensorsignal empfängt, beispielsweise von einem Lichtschrankensensor. Sollte die Steuereinrichtung feststellen, dass die Transfervorrichtung 12 voll beladen ist, sendet diese ein Lager-Signal an den Greifroboter 15, damit dieser in den Lagermodus übergeht.

Wann die Vorrichtung 11 in den Beschleunigungs-Modus übergeht, ist im Allgemeinen frei wählbar. Beispielsweise kann der Beschleunigungsmodus eingeschalten werden, sobald zumindest ein Bauteil 2 auf die Transfervorrichtung 12 legbar ist und sich zumindest ein Bauteil 2 im internen Speicher 16 befindet. Dadurch kann die Transfervorrichtung 12 immer schnellstmöglich beladen werden. Stellt die Steuereinrichtung diese Bedingungen fest, sendet sie ein Beschleunigungs-Signal an den Greifroboter 15, damit dieser in den Beschleunigungsmodus übergeht.

Alternativ oder zusätzlich kann vorgesehen werden, dass der Beschleunigungsmodus eingeschalten wird, wenn die Steuereinrichtung ein bevorstehendes potentielles Problem erkennt, d.h. wenn eine temporäre Reduktion der Taktzeit der Vorrichtung benötigt wird.

Dies kann der Fall sein, wenn beispielsweise die Normaltaktzeit NTZ der letzten X Bauteile gleich oder größer als die Produktionstaktzeit PTZ oder als ein vorbestimmter Schwellwert war, wobei X eine vorbestimmte Anzahl ist, beispielsweise 3, 5 oder 10. Die Steuereinrichtung kann einen potentiellen Problemfall auch genauer bestimmen, beispielsweise wenn die Steuereinrichtung Informationen vom Produktionsroboter 9 erhält, z.B. wann nächste Bauteile 2 benötigt werden.

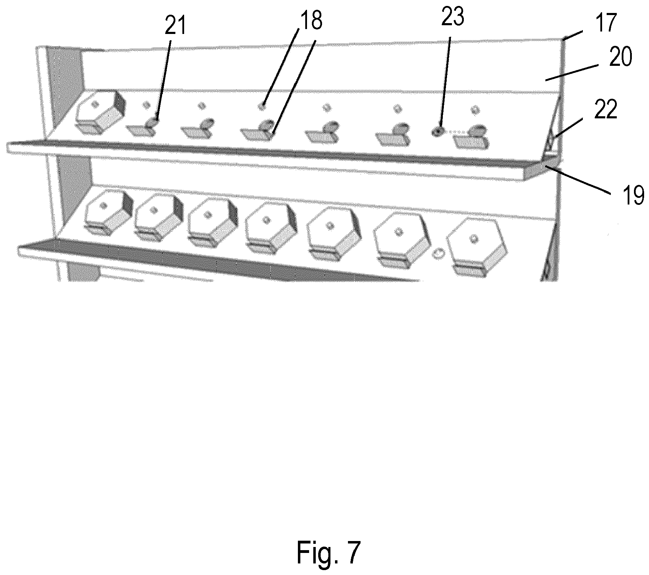

Figur 7 zeigt eine besonders vorteilhafte Möglichkeit, mittels welcher die Vorrichtung 11 feststellen kann, ob sich ein Bauteil 2 auf einer Bauteilaufnahme 18 befindet. Wie auf dem oberen, großteils unbefüllten Bauteilträger 17 zu sehen ist, befindet sich ein Leuchtpunkt 21 unter jeder der Bauteilaufnahmen 18, der von einer nicht weiter dargestellten Kamera ersichtlich ist, wenn sich kein Bauteil 2 auf der jeweiligen Bauteilaufnahme 18 befindet. Wird jedoch ein Bauteil 2 auf eine Bauteilaufnahme 18 gelegt, so wird der zugehörige Leuchtpunkt 21 verdeckt. Die genannte Kamera bzw. eine an diese angeschlossene Auswerteeinheit kann durch das Erkennen eines Leuchtpunktes 21 feststellen, ob die zugehörige Bauteilaufnahme 18 belegt ist oder nicht. Die Auswerteeinheit kann diese Information an die oben genannte Steuereinheit weiterleiten.

In der Ausführungsform von Figur 7 werden alle Leuchtpunkte 21 durch eine gemeinsame Lichtquelle, hier eine LED-Leiste 22, beleuchtet, wobei für jeden Leuchtpunkt 21 eine Öffnung, z.B. eine Bohrung, im Bauteilträger 17 vorgesehen ist, durch welche die LED-Leiste 22 ersichtlich ist. Alle Leuchtpunkte 21 des Bauteilträgers 17 werden somit von einer einzigen Lichtquelle beleuchtet.

In der vorgenannten Ausführungsform kann überdies eine weitere Öffnung 23 im Bauteilträger 17 vorgesehen werden, durch welche die Lichtquelle ersichtlich ist, um ein Kontrolllicht zu erzeugen. Die weitere Öffnung 23 wird derart am Bauteilträger 17 vorgesehen, dass das Kontrolllicht selbst dann ersichtlich ist, wenn alle Bauteilaufnahmen 18 von einem Bauteil 2 belegt sind. Dadurch kann erzielt werden, dass die Funktionstüchtigkeit der Lichtquelle jederzeit überprüfbar ist. Wäre das Kontrolllicht nicht vorhanden, könnte man nicht unterscheiden, ob alle Bauteilaufnahmen 18 von einem Bauteil 2 belegt sind oder ob die Lichtquelle funktionuntüchtig ist.

Alternativ zur vorgenannten Ausführungsform, bei der das Vorhandensein eines Bauteils 2 auf einer Bauteilaufnahme 18 durch die Detektion eines ersichtlichen oder nichtersichtlichen Leuchtpunkts 21 im Bild einer Kamera festgestellt wird, kann die Anwesenheit eines Bauteils 2 auch mittels einer speicherprogrammierbaren Steuerung (SPS) mit herkömmlichen Sensoren detektiert werden. Die herkömmlichen Sensoren sind beispielsweise Lichtschranken, kapazitive oder induktive Sensoren. Auch eine rein mechanische Detektion von Bauteilen 2 auf den Bauteilaufnahmen 18 ist möglich.

Im Allgemeinen ist die Transfervorrichtung 12 dazu ausgebildet, eine Vielzahl von Bauteilen 2 aufzunehmen und von der Vorrichtung 11 zur Produktionsseite zu überführen. Wie oben erwähnt kann die Transfervorrichtung 12 beispielweise als Stauförderer 5 ausgebildet werden. Gemäß den Figuren 2 und 3 kann die Transfervorrichtung 12 jedoch auch ein Produktionspuffer sein, der zumindest zwei verschwenkbare weitere Bauteilträger 24 umfasst, die jeweils zumindest zwei weitere Bauteilaufnahmen 25 zur Aufnahme eines Bauteils 2 umfassen, wobei die Bauteilträger 24 jeweils um parallel zueinander liegende Achsen A schwenkbar sind und von einer Beladestellung, in welcher Bauteile vom Greifroboter 15 auf die Bauteilaufnahmen 18 legbar sind, in eine Entladestellung verschwenkbar sind, in welcher die Bauteile 2 von der Produktionsseite 7 entnehmbar sind. In dieser Ausführungsform sind die Bauteilträger 24 bevorzugt jeweils um horizontale oder vertikale Achsen verschwenkbar. Weiters können die Achsen in einer gemeinsamen vertikalen Ebene oder in einer Ebene liegen, die gegenüber der vertikalen Ebene geneigt ist. Auch die weiteren Bauteilträger 24 können längliche, bevorzugt L-förmige, Profile sein, auf welchen die weiteren Bauteilaufnahmen 25 linear angeordnet sind.

## Patentansprüche

1. Vorrichtung (11) zur Aufnahme eines Bauteils (2) aus einem Behälter (3) und Übergabe des Bauteils (2) an eine Produktionsseite (7),
wobei die Vorrichtung (11) einen Greifroboter (15) umfasst, welcher dazu ausgebildet ist, einen Bauteil (2) aus dem Behälter (3) aufzunehmen und den aus dem Behälter (3) aufgenommenen Bauteil (2) auf eine Transfervorrichtung (12) zu legen,
**dadurch gekennzeichnet, dass**
die Vorrichtung (11) eine Steuereinrichtung und einen internen Speicher (16) mit zumindest einer Bauteilaufnahme (18) zur Zwischenlagerung von Bauteilen (2) aufweist,
wobei der Greifroboter (15) dazu ausgebildet ist, nach Erhalt eines Lager-Signals von der Steuereinrichtung einen Bauteil (2) aus dem Behälter (3) aufzunehmen und den aus dem Behälter (2) aufgenommenen Bauteil (2) auf die Bauteilaufnahme (18) des internen Speichers (16) zu legen, und
wobei der Greifroboter (15) weiters dazu ausgebildet ist, nach Erhalt eines Beschleunigungs-Signals von der Steuereinrichtung einen Bauteil (2) von der Bauteilaufnahme (18) des internen Speichers (16) aufzunehmen und den vom internen Speicher (16) aufgenommenen Bauteil (2) auf die Transfervorrichtung (12) zu legen.

2. Vorrichtung (11) nach Anspruch 1, wobei die Steuereinrichtung dazu ausgebildet ist, das Lager-Signal an den Greifroboter (15) zu senden, wenn die Transfervorrichtung (12) voll beladen ist.

3. Vorrichtung (11) nach Anspruch 1 oder 2, wobei die Steuereinrichtung dazu ausgebildet ist, das Beschleunigungs-Signal an den Greifroboter (15) zu senden, wenn ein Bauteil (2) auf die Transfervorrichtung (12) legbar ist und sich zumindest ein Bauteil (2) im internen Speicher (16) befindet.

4. Vorrichtung (11) nach einem der Ansprüche 1 bis 3, wobei die Steuereinrichtung dazu ausgebildet ist, das Beschleunigungs-Signal an den Greifroboter (15) zu senden, wenn eine temporäre Reduktion der Taktzeit der Vorrichtung (11) benötigt wird.

5. Vorrichtung (11) nach einem der Ansprüche 1 bis 4, wobei der interne Speicher (16) zumindest fünf, bevorzugt zumindest zehn, bevorzugt zumindest dreißig Bauteilaufnahmen (18) aufweist.

6. Vorrichtung (11) nach einem der Ansprüche 1 bis 4, wobei der interne Speicher (16) zumindest so viele Bauteilaufnahmen (18) aufweist, wie Bauteile (2) gleichzeitig auf die Transfervorrichtung (12) gelegt werden können.

7. Vorrichtung (11) nach einem der Ansprüche 1 bis 6, wobei der interne Speicher (16) zumindest zwei unterschiedlich ausgestaltete Bauteilaufnahmen (18) für unterschiedliche Typen von Bauteilen (2) aufweist.

8. Vorrichtung (11) nach einem der Ansprüche 1 bis 6, wobei der interne Speicher (16) zumindest einen oder zumindest zwei bevorzugt parallel zueinander angeordnete Bauteilträger (17) umfasst, auf denen Bauteilaufnahmen (18) linear angeordnet sind.

9. Vorrichtung (11) nach einem der Ansprüche 1 bis 7, ferner umfassend die Transfervorrichtung (12), welche als Stauförderer (5) mit Förderband ausgebildet ist.

10. Vorrichtung (11) nach einem der Ansprüche 1 bis 7, ferner umfassend die Transfervorrichtung (12), welche als Produktionspuffer ausgebildet ist, der zumindest zwei verschwenkbare weitere Bauteilträger (24) umfasst, die jeweils zumindest zwei weitere Bauteilaufnahmen (25) zur Aufnahme eines Bauteils (2) umfassen, wobei die weiteren Bauteilträger (24) jeweils um parallel zueinander liegende Achsen (A) schwenkbar sind und von einer Beladestellung, in welcher Bauteile (2) vom Greifroboter (15) auf die weiteren Bauteilaufnahmen (25) legbar sind, in eine Entladestellung verschwenkbar sind, in welcher die Bauteile (2) von der Produktionsseite (7) entnehmbar sind.

11. Vorrichtung (11) nach einem der Ansprüche 1 bis 10, umfassend eine Auswerteeinheit, eine mit der Auswerteeinheit verbundene Kamera und einen Leuchtpunkt (21) unter jeder der Bauteilaufnahmen (18) aller Bauteilträger (17), wobei ein jeweiliger Leuchtpunkt (21) von der Kamera erkennbar ist, wenn die jeweilige Bauteilaufnahme (18) unbelegt ist und von der Kamera unerkennbar ist, wenn sich ein Bauteil (2) auf der jeweiligen Bauteilaufnahme (18) befindet,
wobei die Auswerteeinheit dazu ausgebildet ist, eine Bauteilaufnahme (18) als belegt oder verdeckt zu erkennen, wenn ein jeweiliger Leuchtpunkt (21) im von der Kamera aufgenommenen Bild ersichtlich ist oder nicht.

12. Vorrichtung (11) nach Anspruch 11, wobei alle Leuchtpunkte (21) eines Bauteilträgers (17) durch eine einzige Lichtquelle, bevorzugt eine LED-Leiste (22), beleuchtet werden und jeweils durch Öffnungen im Bereich der Bauteilaufnahmen (18) ausgebildet sind, wobei jeder Bauteilträger (17) weiters bevorzugt eine weitere Öffnung (23) umfasst, durch welche die Lichtquelle ersichtlich ist, selbst wenn alle Bauteilaufnahmen von Bauteilen belegt sind.

13. Vorrichtung (11) nach einem der Ansprüche 1 bis 11, umfassend ein Gehäuse (13), wobei der Greifroboter (15) vom Gehäuse (13) umschlossen ist und der Behälter (3) über eine Einschuböffnung (4) in die Vorrichtung (11) einbringbar ist.

14. System umfassend eine Vorrichtung (11) nach einem der Ansprüche 1 bis 12 und einen auf der Produktionsseite (7) befindlichen Produktionsroboter (9), welcher dazu ausgebildet ist, Bauteile (2) von der Transfervorrichtung (12) aufzunehmen.

15. System nach Anspruch 13, wobei der Produktionsroboter (9) eine durchschnittliche Normaltaktzeit aufweist, die höher ist als eine durchschnittliche Produktionstaktzeit der Vorrichtung (11).
